# EUROPÄISCHE PATENTANMELDUNG

(11) **EP 1 649 750 A2**
(43) Veröffentlichungstag der Anmeldung: **26.04.2006**
(21) Anmeldenummer: 06001174.9
(22) Anmeldetag: 13.05.1996
(51) Int. Cl.: A01N 51/00, A01N 47/40, A01N 57/28, A01N 57/16, A01N 57/14, A01N 55/10, A01N 47/34, A01N 47/22, A01N 43/36, A01N 37/28

(54) **Synergistische insektizide Mischungen auf der Basis von Chlornicotinyl-Insektiziden**

(30) Priorität: 24.05.1995 DE 19519007
(62) Teilanmeldung aus: 96919773.0
(71) Anmelder: Bayer CropScience AG, 40789 Monheim (DE)
(72) Erfinder: Erdelen, Christoph, Dr., deceased (DE); Krämer, Wolfgang, Dr., 51399 Burscheid (DE); Brüggen, Kai-Uwe, Dr., 45549 Sprockhövel (DE)

(57) **Zusammenfassung**

Die vorliegende Erfindung betrifft insektizide Mischungen von Chlornicotinyl-Insektiziden der Formel (I) 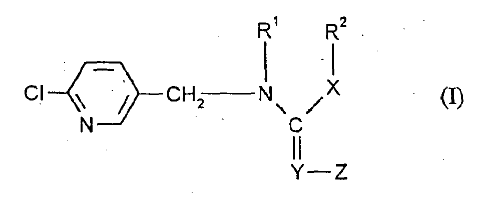 in welcher
- R¹: für C₁-C₅-Alkyl steht,
- R²: für Wasserstoff oder C₁-C₅-Alkyl steht
oder
R¹ und R² zusammen für -CH₂-CH₂-, -CH₂-CH₂-CH₂- oder 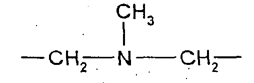 stehen,
- X: für eine NH-Gruppe, NCH₃-Gruppe oder für Schwefel steht,
- Y: für Stickstoff oder eine CH-Gruppe steht und
- Z: für Cyano oder Nitro steht,
mit einem oder mehreren in der Beschreibung genannten Synergisten.

## Beschreibung

### Insektizide Mittel

Die vorliegende Erfindung betrifft insektizide Mittel auf der Basis von Chlornicotinyl-Insektiziden und Synergisten für Insektizide.

Chlornicotinyl-Insektizide sind bekannt z.B. aus EP-OS 192 060.

Synergisten für Insektizide sind Hemmstoffe für Oxidasen oder Cytochrom P 450 oder erhöhen die Penetrierbarkeit von Zellmembranen. Sie sind bekannt z. B. aus Chemie der Pflanzenschutz- und Schädlingsbekämpfungsmittel Bnd. 7 K. Naumann Chemie der Synthetischen Pyrethroid-Insektizide Springer Verlag 1981 Seiten 3-5.

Die vorliegende Erfindung betrifft Mischungen von Chlornicotinyl-Insektiziden der Formel (I) 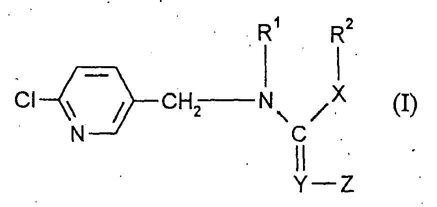 in welcher
- R¹: für C₁-C₅-Alkyl steht,
- R²: für Wasserstoff oder C₁-C₅-Alkyl steht
oder
- R¹ und R²: zusammen für -CH₂-CH₂-; -CH₂-CH₂-CH₂- oder 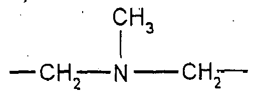 stehen,
- X: für eine NH-Gruppe, NCH₃-Gruppe oder für Schwefel steht,
- Y: für Stickstoff oder eine CH-Gruppe steht und
- Z: für Cyano oder Nitro steht,
mit einen oder mehreren Synergisten der Gruppe
O,O-Dimethyl-S-(4-oxo-1,2,3-benzotriazin-3-methyl)-dithiophosphat [M-Gusathion];
O-Ethyl-O-(4-brom-2-chlorphenyl)-s-#N-propyl-thiophosphat [Curacron];
3,5-Dimethyl-4-methylthiophenyl-N-methylcarbamat [Mesurol];
4-Brom-2-(4-chlorphenyl)-2-(ethoximethyl)-5-(trifluormethyl)-1H-pyrrol-3-carbonitril [AC 303, 630];
O,S-Dimethylamidothiophosphat [Tamaron]
N-[2,6-Bis(-1-methylethyl)-4-phenoxyphenyl)-N'-(1,1-dimethylethyl)-thioharnstoff [CGA 106 630; Polo];
Abamectin;
Ethyl-(3-t-butyl-1-dimethylcarbamoyl-1H-1,2,4-triazol-5-ylthio)-acetat [Triazuron];
6,7,8,9,10,10-Hexachlor-1,5,5A,6,9,9A-hexahydro-6,9-methan-2,4,3-benzodioxathiepin-3-oxid [Endosulfan; Thiodan];
trans-5-(4-Chlorphenyl)-N-cyclohexyl-4-methyl-2-oxo-3-thiazolidin-carboxamid [Cesar; Hexythiazox];
3,6-Bis-(2-chlorphenyl)-1,2,4,5-tetrazin [Clofentezin; Apollo];
Ethyl-[2-(4-phenoxyphenoxy)-ethyl]carbamat [Fenoxycarb; Insegar];
2-[1-Methyl-2-(4-phenoxyphenoxy)ethoxy]pyridin [Pyriproxyfen; Tiger];
N-Cyclopropyl-1,3,5-triazin-2,4,6-triamin [Cyromazin];
Benzoesäure-[-2-benzoyl-1-(1,1-dimethyl)]hydrazid [RH 5849];
5-Amino-3-cyano-1-(2,6-dichlor-4-trifluormethylpheny-1)-4-trifluormethylthionopyrazol [Fipronil];
cis-(2,3,5,6-Tetrafluor-4-methylphenyl)methyl-3-(2-chlor-3,3,3-trifluor-1-propenyl)-2,2-dimethyl-cyclopropan-carboxylat [Tefluthrin; Force];
1,5-Bis-(2,4-dimethylphenyl)-3-methyl-1,3,5-triazapenta-1,4-dion [Amitraz];
3,5-Dimethylbenzoesäure-1-(1,1-dimethylethyl)-2-(4-ethylbenzoyl)hydrazid [RH 5992];
N-[[2,5-Dichlor-4-(1,1,2,3,3,3-hexafluorpropoxy)phenyl]-aminocarbonyl]-2,6-difluorbenzamid [Match];
(4-Ethoxyphenyl)-[3-(4-fluor-3-phenoxyphenyl)propyl]dimethylsilan [HOE 498];
und/oder
(E)-4,5-Dihydro-6-methyl-4-[(3-pyridinylmethylen)amino]-1,2,4-triazin-3-(2H)-on [Chess].

Bevorzugt sind erfindungsgemäße Mischungen obigen genannter Synergisten mit Chlornicotinyl Insektiziden folgender Strukturformeln:

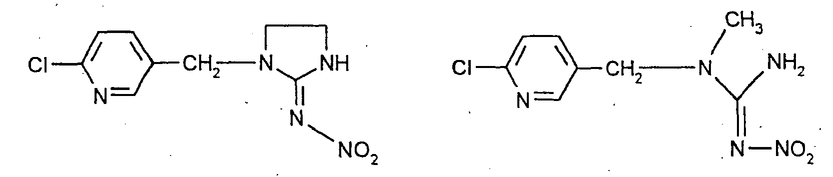

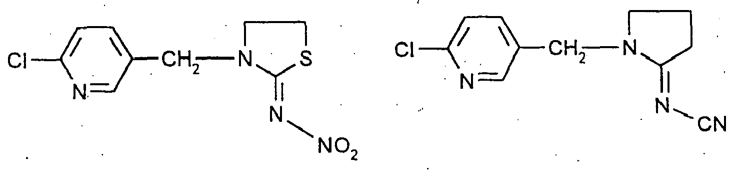

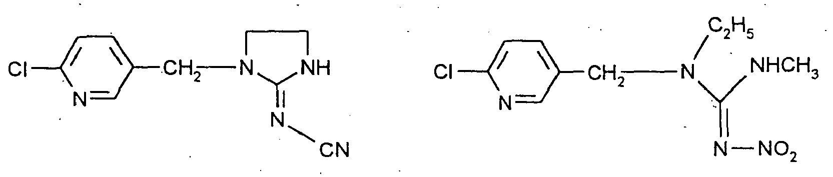

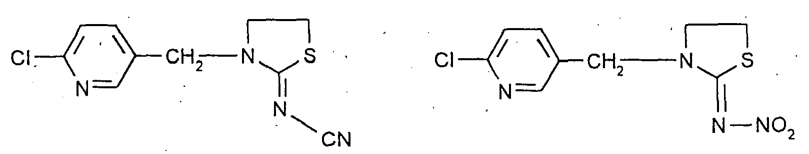

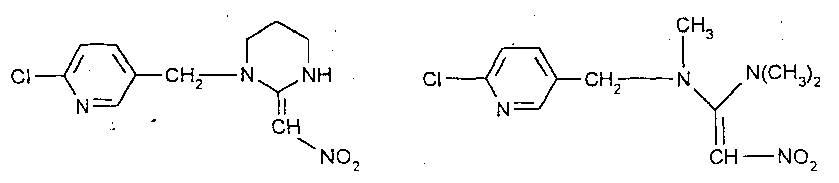

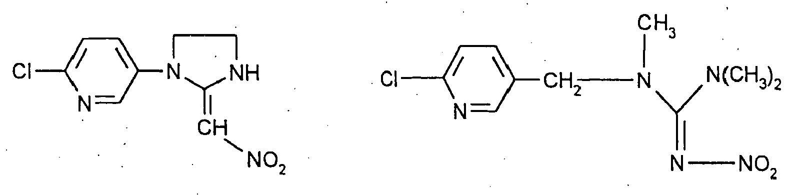

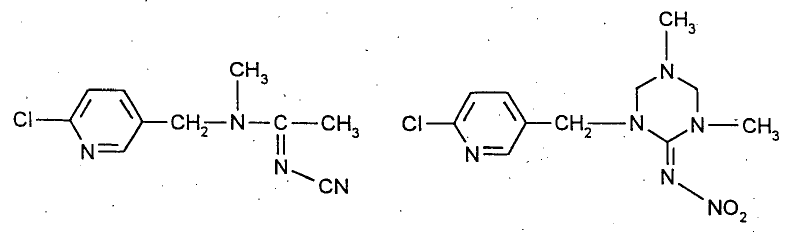

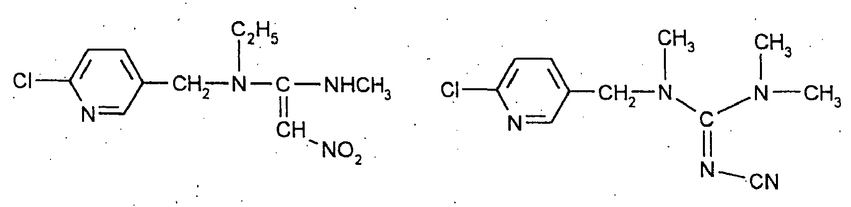

Insbesondere bevorzugt sind erfindungsgemäße Mischungen oben genannter Synergisten mit Chlornicotinyl-Insektiziden der Formeln

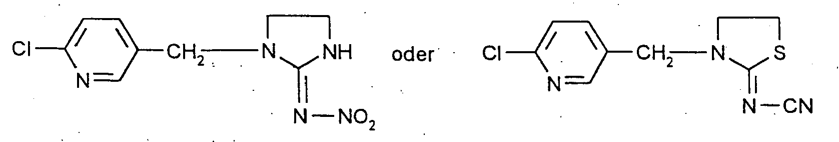

Die erfindungsgemäßen Wirkstoffmischungen von Chlornicotinyl-Insektiziden mit den oben angegebenen Synergisten können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffmischung, vorzugsweise zwischen 0,5 und 90 %.

Die Wirkstoffmischungen eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria. Aus der Ordnung der Dermaptera z.B. Forficula auricularia.
Aus der Ordnung der Isoptera z.B. Reticulitermes spp..
Aus der Ordnung der Anoplura z.B. Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Phylloxera vastatrix, Pemphigus spp., Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp.
Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die erfindungsgemäßen Wirkstoffmischungen können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

In den folgenden Beispielen wird als insektizider Wirkstoff aus der Gruppe der Chlornicotinylinsektizide Imidacloprid der folgenden Formel verwendet:

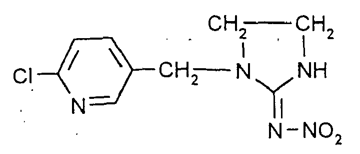

### Beispiel A

### Phaedon-Larven-Test

| | | |
|---|---|---|
| Lösungsmittel: | 7 Gewichtsteile | Dimethylformamid |
| Emulgator: | 1 Gewichtsteil | Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit werden die Pflanzen mit Meerrettichblattkäfer-Larven (Phaedon cochleariae) besetzt. Nach jeweils 7 Tagen wird die Abtötung in % bestimmt. Dabei bedeutet 100 %, daß alle Käfer-Larven abgetötet wurden; 0 % bedeutet, daß keine Käfer-Larven abgetötet wurden.

Es wurden jeweils 0,02 % des Synergisten der jeweiligen Testkonzentration des Imidacloprids zugemischt. Bei diesem Test zeigten z.B. die folgenden Mischungen synergistische Wirkung:

**Tabelle A (pflanzenschädigende Insekten) Phaedon-Larven Test**

| Wirkstoffe | Wirkstoffkonzentration in % | Abtötungsgrad in % nach 7 Tagen |
|---|---|---|
| Imidacloprid | 0,0008 | 5 |
| M-Gusathion | 0,0008 | 40 |
| Imidacloprid + M-Gusathion | 0,0008 + 0,0008 | 95 |
| HOE 498 | 0,008 | 35 |
| Imidacloprid + HOE 498 | 0,0008 + 0,0008 | 100Curacron |
| Curacron | 0,0008 | 15 |
| Imidacloprid + Curacron | 0,0008 + 0,0008 | 70 |

### Beispiel B

### Plutella-Test (BLT-Resistenz)

| | | |
|---|---|---|
| Lösungsmittel: | 7 Gewichtsteile | Dimethylformamid |
| Emulgator: | 1 Gewichtsteil | Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis, BLT-Resistenz) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Es wurden jeweils 0,02 % des Synergisten der jeweiligen Testkonzentration des Imidacloprids zugemischt. Bei diesem Test zeigten z.B. die folgenden Mischungen synergistische Wirkung:

**Tabelle B (pflanzenschädigende Insekten) Plutella-Test (resistent)**

| Wirkstoffe | Wirkstoffkonzentration in % | Abtötungsgrad in % nach 7 Tagen |
|---|---|---|
| Imidacloprid | 0,004 | 0 |
| M-Gusathion | 0,0008 | 0 |
| Imidacloprid + M-Gusathion | 0,004 + 0,0008 | 100 |
| HOE 498 | 0,0008 | 0 |
| Imidacloprid + HOE 498 | 0,004 + 0,0008 | 100 |
| Curacron | 0,0008 | 40 |
| Imidacloprid + Curacron | 0,004 + 0,0008 | 100 |
| Mesurol | 0,004 | 0 |
| Imidacloprid + Mesurol | 0,004 + 0,004 | 100 |
| Tamaron | 0,004 | 0 |
| Imidacloprid + Tamaron | 0,004 + 0,004 | 100 |
| Match | 0,0000064 | 0 |
| Imidacloprid + Match | 0,004 + 0,0000064 | 65 |

### Beispiel C

### Spodoptera-Test

| | | |
|---|---|---|
| Lösungsmittel: | 7 Gewichtsteile | Dimethylformamid |
| Emulgator: | 1 Gewichtsteil | Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Spodoptera frugiperda) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Es wurden jeweils 0,02 % des Synergisten der jeweiligen Testkonzentration des Imidacloprids zugemischt. Bei diesem Test zeigten z.B. die folgenden Mischungen synergistische Wirkung:

**Tabelle C (pflanzenschädigende Insekten) Spodoptera frugiperda-Test**

| Wirkstoffe | Wirkstoffkonzentration in % | Abtötungsgrad in % nach 7 Tagen |
|---|---|---|
| Imidacloprid | 0,004 | 50 |
| | 0,0008 | 0 |
| AC 303.630 | 0,0008 | 0 |
| Imidacloprid + AC 303 630 | 0,004 + 0,0008 | 100 |
| RH 5992 | 0,0008 | 0 |
| Imidacloprid + RH 5992 | 0,004 + 0,0008 | 100 |
| Tamaron | 0,004 | 0 |
| Imidacloprid + Tamaron | 0,004 + 0,004 | 100 |
| Match | 0,0000064 | 15 |
| Imidacloprid + Match | 0,004 + 0,0000064 | 100 |

### Beispiel D

### Myzus-Test

| | | |
|---|---|---|
| Lösungsmittel: | 3 Gewichtsteile | Dimethylformamid |
| Emulgator: | 1 Gewichtsteil | Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

**Tabelle D (pflanzenschädigende Insekten) Myzus-Test**

| Wirkstoffe | Wirkstoffkonzentration in % | Abtötungsgrad in % nach 6 Tagen |
|---|---|---|
| Imidacloprid | 0,00016 | 10 |
| Mesurol | 0,004 | 0 |
| Imidacloprid + Mesurol | 0,00016 + 0,004 | 70 |
| Tamaron | 0,004 | 0 |
| Imidacloprid + Tamaron | 0,00016 + 0,004 | 80 |

## Patentansprüche

1. Insektizide Mischungen von Chlornicotinyl-Insektiziden der Formel (I) 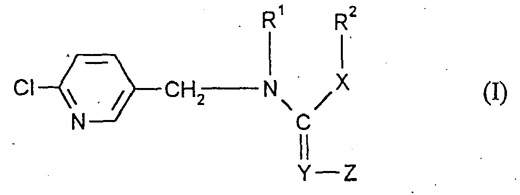 in welcher
R¹ für C₁-C₅-Alkyl steht,
R² für Wasserstoff oder C₁-C₅-Alkyl steht
oder
R¹ und R² zusammen für -CH₂-CH₂-; -CH₂-CH₂-CH₂- oder 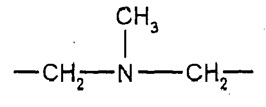 stehen,
X für eine NH-Gruppe, NCH₃-Gruppe oder für Schwefel steht,
Y für Stickstoff oder eine CH-Gruppe steht und
Z für Cyano oder Nitro steht,
mit einem oder mehreren Synergisten der Gruppe
O,O-Dimethyl-S-(4-oxo-1,2,3-benzotriazin-3-methyl)-dithiophosphat [M-Gusathion];
O-Ethyl-O-(4-brorn-2-chlorphenyl)-s-#N-propyl-thiophosphat [Curacron];
3,5-Dimethyl-4-methylthiophenyl-N-methylcarbamat [Mesurol];
4-Brom-2-(4-chlorphenyl)-2-(ethoximethyl)-5-(trifluormethyl)-1H-pyrrol-3-carbonitril [AC 303, 630];
N-[2,6-Bis(-1-methylethyl)-4-phenoxyphenyl)-N'-(1,1-dimethylethyl)-thioharnstoff [CGA 106 630; Polo];
Abamectin;
Ethyl-(3-t-butyl-1-dimethylcarbamoyl-1H-1,2,4-triazol-5-ylthio)-acetat [Triazuron];
6,7,8,9,10,10-Hexachlor-1,5,5A,6,9,9A-hexahydro-6,9-methan-2,4,3-benzodioxathiepin-3-oxid [Endosulfan; Thiodan];
trans-5-(4-Chlorphenyl)-N-cyclohexyl-4-methyl-2-oxo-3-thiazolidin-carboxamid [Cesar; Hexythiazox];
3,6-Bis-(2-chlorphenyl)-1,2,4,5-tetrazin [Clofentezin; Apollo];
Ethyl-[2-(4-phenoxyphenoxy)-ethyl]carbamat [Fenoxycarb; Insegar];
2-[1-Methyl-2-(4-phenoxyphenoxy)ethoxy]pyridin [Pyriproxyfen; Tiger];
N-Cyclopropyl-1,3,5-triazin-2,4,6-triamin, [Cyromazin];
Benzoesäure-[-2-benzoyl-1-(1,1-dimethyl)]hydrazid [RH 5849];
5-Amino-3-cyano-1-(2,6-dichlor-4-trifluormethylphenyl)-4-trifluormethylthionopyrazol [Fipronil];
cis-(2,3,5,6-Tetrafluor-4-methylphenyl)methyl-3-(2-chlor-3,3,3-trifluor-1-propenyl)-2,2-dimethyl-cyclopropan-carboxylat [Tefluthrin; Force];
1,5-Bis-(2,4-dimethylphenyl)-3-methyl-1,3,5-triazapenta-1,4-dion [Amitraz];
3,5-Dimethylbenzoesäure-1-(1,1-dimethylethyl)-2-(4-ethylbenzoyl)hydrazid [RH 5992];
N-[[2,5-Dichlor-4-(1,1,2,3,3,3-hexafluorpropoxy)phenyl]-aminocarbonyl]-2,6-difluorbenzamid [Match];
(4-Ethoxyphenyl)-[3-(4-fluor-3-phenoxyphenyl)propyl]dimethylsilan [HOE 498];
und
(E)-4,5-Dihydro-6-methyl-4-[(3-pyridinylmethylen)amino]-1,2,4-triazin-3-(2H)-on [Chess].

2. Insektizide Mischungen von Chlornicotinyl Insektiziden folgender Strukturformeln: 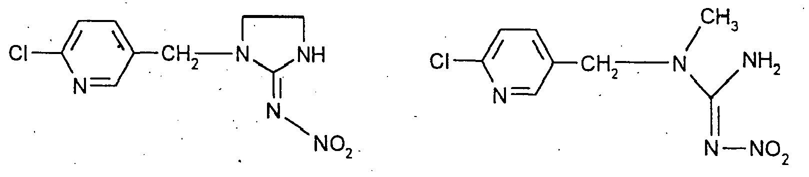 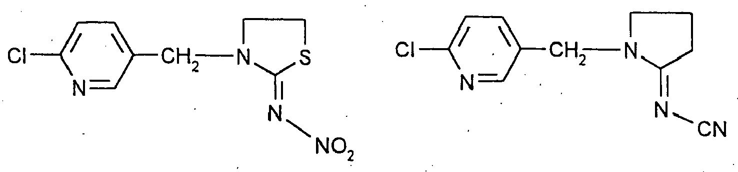 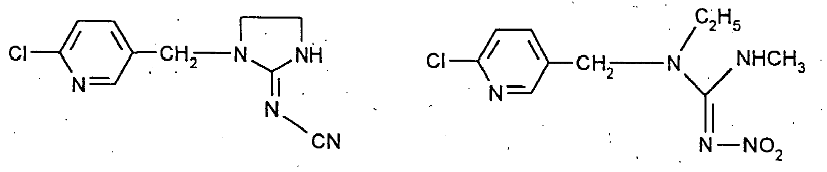 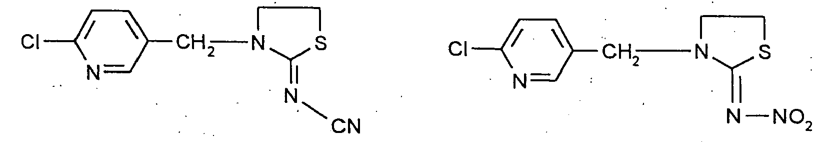 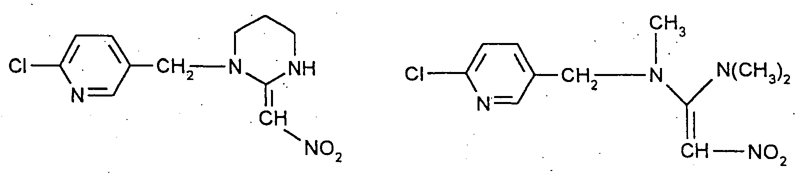 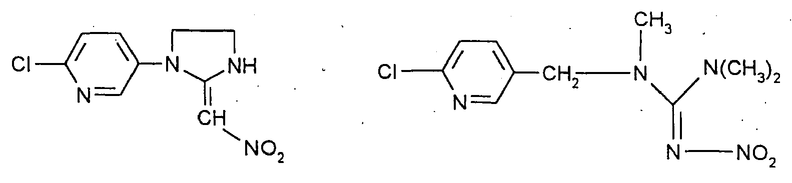 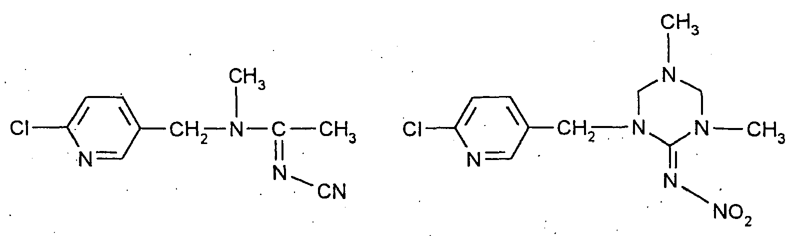 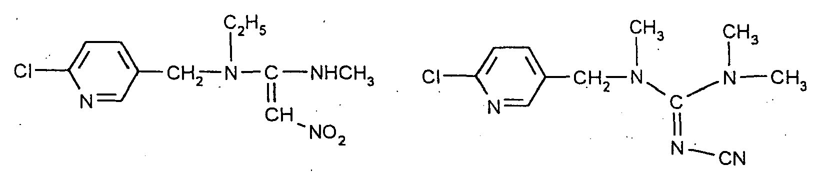 mit einem oder mehreren Synergisten gemäß Anspruch 1.

3. Insektizide Mischungen von Chlornicotinyl-Insektiziden der Formeln 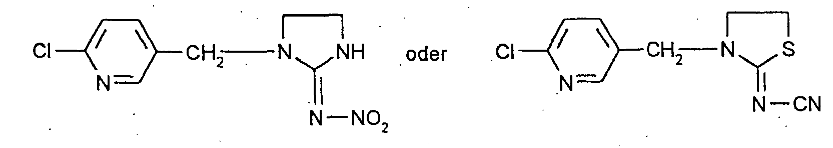 mit einem oder mehreren Synergisten gemäß Anspruch 1.

4. Verfahren zur Herstellung insektizider Mischungen von Chlornicotinyl-Insektiziden mit einem oder mehreren Synergisten gemäß Anspruch 1, **dadurch gekennzeichnet, daß** man die Wirkstoffe mit Streckmitteln gegebenenfalls unter Verwendung von oberflächenaktiven Mitteln vermischt.

5. Insektizide Formulierungen gemäß Anspruch 1, **dadurch gekennzeichnet, daß** sie zwischen 0,1 und 95 Gewichtsprozent Wirkstoffmischung enthalten.

6. Verwendung der insektiziden Wirkstofformulierungen gemäß Anspruch 1 zur Bekämpfung von Insekten, Spinnentieren und Nematoden.
